# EUROPEAN PATENT APPLICATION

(11) **EP 4 333 508 A1**
(43) Date of publication of application: **06.03.2024**
(21) Application number: 21938553.1
(22) Date of filing: 30.04.2021
(51) Int. Cl.: H04W 52/02, H04W 36/00

(54) **WIRELESS COMMUNICATION METHOD, TERMINAL DEVICE, NETWORK DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Ipside
(86) International application number: PCT/CN2021/091730
(87) International publication number: WO 2022/227079

(57) **Abstract**

Disclosed in the present invention is a wireless communication method, comprising: a terminal device receives a threshold value sent by a network device, the threshold value at least comprising one of a first threshold value and a second threshold value, the first threshold value being used for determining whether the terminal device is located in a serving space range of a serving cell, and the second threshold value being used for determining whether the terminal device is located in a serving time range of the serving cell; and the terminal device determines, according to the threshold value, whether to perform neighboring cell radio resource management measurement relaxation. Further disclosed in the present invention are another wireless communication method, a terminal device, a network device, and a storage medium.

## Description

### TECHNICAL FIELD

The present disclosure relates to mobile communication technology, and in particular to a wireless communication method, a User Equipment (UE), a network device and a storage medium.

### BACKGROUND

Non Terrestrial Networks (NTNs) provide communication services for ground users by means of communication satellite communication. The communication satellite communication has many unique advantages over terrestrial cellular network communication, such as not being limited by geographic location of users, long distance of communication, high stability, and the like. However, since a measurement value of a Reference Signal Receiving Power (RSRP) cannot accurately reflect a difference between a cell edge and a cell center, a traditional not-cell-edge criterion based on an RSRP threshold cannot accurately describe a location of a User Equipment (UE) in the cell. For example, when the RSRP value of the UE is lower than the RSRP threshold, the UE may be in the center of the cell due to the problem of RSRP measurement accuracy. At this time, if relaxed measurement is performed, power consumption of the UE would be increased. Similarly, if the RSRP value of the UE is higher than the RSRP threshold, the UE may actually be at an edge of the cell. At this time, according to the not-cell-edge criterion, the UE may not perform measurement, which may affect mobility performance of the UE, such as resulting in late cell reselection.

### SUMMARY

Embodiments of the present disclosure provide a wireless communication method, a UE, a network device and a storage medium, which can accurately determine whether a UE is currently provided with a stable service by a serving cell, so as to accurately determine a timing for performing measurement relaxation and to reduce the power consumption of the UE.

In a first aspect, embodiments of the present disclosure provide a wireless communication method, which includes the following operations.

A UE receives a threshold sent by a network device. The threshold includes at least one of a first threshold or a second threshold. The first threshold is used for determining whether the UE is located within a service space range of a serving cell, and the second threshold is used for determining whether the UE is located within a service time range of the serving cell.

The UE determines whether to perform Radio Resource Management (RRM) measurement relaxation in a neighbor cell according to the threshold.

In a second aspect, embodiments of the present disclosure provide a wireless communication method, which includes the following operations.

A network device sends a threshold to a UE. The threshold is configured to be used by the UE to determine whether to perform RRM measurement relaxation in a neighbor cell. The threshold includes at least one of a first threshold or a second threshold. The first threshold is used for determining whether the UE is located within a service space range of a serving cell, and the second threshold is used for determining whether the UE is located within a service time range of the serving cell.

In a third aspect, embodiments of the present disclosure provide a UE, which includes a receiving unit and a determination unit.

The receiving unit is configured to receive a threshold sent by a network device. The threshold at least includes at least one of a first threshold or a second threshold. The first threshold is used for determining whether the UE is located within a service space range of a serving cell, and the second threshold is used for determining whether the UE is located within a service time range of the serving cell.

The determination unit is configured to determine, according to the threshold, whether to perform RRM measurement relaxation in a neighbor cell.

In a fourth aspect, embodiments of the present disclosure provide a network device, which includes a sending unit.

The sending unit is configured to send a threshold to a UE. The threshold is configured to be used by the UE to determine whether to perform RRM measurement relaxation in a neighbor cell. The threshold includes at least one of a first threshold or a second threshold. The first threshold is used for determining whether the UE is located within a service space range of a serving cell, and the second threshold is used for determining whether the UE is located within a service time range of the serving cell.

In a fifth aspect, embodiments of the present disclosure provide a UE. The UE includes a processor and a memory for storing a computer program executable on the processor. The processor is configured to execute the operations of the wireless communication method performed by the UE described above when running the computer program.

In a sixth aspect, embodiments of the present disclosure provide a source base station. The source base station includes a processor and a memory for storing a computer program executable on the processor. The processor is configured to execute the operations of the wireless communication method performed by the network device described above when running the computer program.

In a seventh aspect, embodiments of the present disclosure provide a storage medium storing an executable program that, when executed by a processor, implements the wireless communication method performed by the UE described above.

In an eighth aspect, embodiments of the present disclosure provide a storage medium storing an executable program that, when executed by a processor, implements the wireless communication method performed by the network device described above.

A wireless communication method provided by the embodiments of the present disclosure includes the following operations. A UE receives a threshold sent by a network device. The threshold includes at least one of a first threshold or a second threshold. The first threshold is used for determining whether the UE is located within a service space range of a serving cell, and the second threshold is used for determining whether the UE is located within a service time range of the serving cell. The UE determines whether to perform RRM measurement relaxation in a neighbor cell according to the threshold. Whether the UE is located within the service space range of the serving cell is determined by means of the first threshold, and/or whether the UE is located within the service time range of the serving cell is determined by means of the second threshold, so that whether the UE is currently provided with a stable service by the serving cell can be accurately determined, thereby accurately determining the timing for performing the measurement relaxation and reducing the power consumption of the UE.

### BRIEF DESCRIPTION OF THE DRAWINGS

FIG. 1 is a diagram of an optional architecture of an NTN network according to an embodiment of the present disclosure.
FIG. 2 is a diagram of an optional architecture of an NTN network according to an embodiment of the present disclosure.
FIG. 3 is an optional diagram of feeder link switching in an NTN network according to an embodiment of the present disclosure.
FIG. 4 is a diagram of an optional architecture of an NTN network according to an embodiment of the present disclosure.
FIG. 5 is a diagram of an optional architecture of an NTN network according to an embodiment of the present disclosure.
FIG. 6 is a diagram of an optional processing flow of a wireless communication method according to an embodiment of the present disclosure.
FIG. 7 is a diagram of an optional processing flow of a wireless communication method according to an embodiment of the present disclosure.
FIG. 8 is a diagram of an optional processing flow of a wireless communication method according to an embodiment of the present disclosure.
FIG. 9 is a diagram of a coverage effect of a serving cell according to an embodiment of the present disclosure.
FIG. 10 is a diagram of an optional effect of performing measurement relaxation based on a third criterion according to an embodiment of the present disclosure.
FIG. 11 is a diagram of an optional effect of performing measurement relaxation based on a third criterion according to an embodiment of the present disclosure.
FIG. 12 is a diagram of an optional structure of a UE according to an embodiment of the present disclosure.
FIG. 13 is a diagram of an optional structure of a network device according to an embodiment of the present disclosure.
FIG. 14 is a diagram of an optional structure of an electronic device according to an embodiment of the present disclosure.

### DETAILED DESCRIPTION

In order to better understand the features and technical content of the embodiments of the present disclosure, the implementation of the embodiments of the present disclosure are explained in detail below with reference to the drawings. The drawings are merely for illustration purpose and are not intended to limit the embodiments of the present disclosure.

Before the wireless communication methods provided in the embodiments of the present disclosure are described in detail, a brief description of the measurement relaxation and the NTN in terrestrial cellular network communication is first provided.

### Measurement relaxation

With people's pursuit of speed, delay, high-speed mobility and energy efficiency, and the diversity and complexity of services in future life, the International Standards Organization of the 3rd Generation Partnership Project (3GPP) has begun to develop the 5th generation (5G). The main application scenarios of 5G may include Enhanced Mobile Broadband (eMBB), Ultra Reliable and Low Latency Communication (URLLC), and Massive MachineType Communication (mMTC).

In the 5G network environment, in order to reduce air interface signaling, quickly restore wireless connections, and quickly restore data services, a new Radio Resource Control (RRC) state, i.e., a connection inactive state (RRC_INACTIVE state), is defined. The inactive state is different from an idle state (RRC_IDLE state) and an active state (RRC_ACTIVE state).

RRC_IDLE state: mobility is cell selection and reselection based on the UE. Paging is initiated by a Core Network (CN), and paging areas are configured by the CN. There is no UE Access Stratum (AS) context at a base station side, and there is no RRC connection.

RRC_CONNECTED state: there is an RRC connection, and there are UE AS contexts between the base station and the UE. A network side is aware of the location of the UE is at the level of a specific cell. Mobility is controlled by the network side. Unicast data may be transmitted between the UE and the base station.

RRC_INACTIVE state: mobility is the cell selection and reselection based on the UE. There is a connection between the core network and an access network (CN-NR). The UE AS context exists on a certain base station. The paging is triggered by a Radio Access Network (RAN). A paging areas based on the RAN is managed by the RAN, and the network device is aware that the location of the UE is at the level of the paging area.

In Revision 17, Reduced Capability (RedCap) devices are introduced in New Radio (NR). At present, the RedCap devices mainly have three kinds of scenarios.
- Industrial Wireless Sensors: compared with URLLC, the industrial wireless sensors have lower requirements on latency and reliability. Meanwhile, the cost and power consumption of the industrial wireless sensors are also lower than the URLLC and eMBB.
- Video surveillance: the video surveillance is primarily used for video surveillance in smart cities, industrial factories, and the like. Data collection and processing in smart cities facilitate more effective monitoring and control of municipal resources, providing more effective services to urban residents.
- Wearables: the wearables include smart watches, wristbands, electronic health devices, some medical monitoring devices, etc. One commonality of these devices is that the size is small.

### Measurement start-up in the RRC_IDLE state and the RRC_INACTIVE state

Behaviors of measurement in the neighbor cell of the UE in the RRC_IDLE state and the RRC_INACTIVE state are constrained by relevant parameters in a system broadcast message. For example:

For start-up of intra-frequency measurement, when a received power (Srxlev) in a cell search of a serving cell is greater than a signal electrical level threshold (SIntraSearchP) of a Reference Signal Received Power (RSRP) for starting the intra-frequency measurement, and the signal quality (Squal) received in the cell search of the serving cell is greater than a signal quality threshold (SnonIntraSearchQ) of the Reference Signal Receiving Quality (RSRQ) for starting the intra-frequency measurement, intra-frequency measurement in the neighbor cell is not started, otherwise the intra-frequency measurement in the neighbor cell is started.

For inter-frequency measurement of the same priority or a low priority, when the Srxlev of the serving cell is greater than a signal electrical level threshold (SnonIntraSearchP) of an RSRP for starting the inter-frequency measurement, and the Squal of the serving cell is greater than a signal quality threshold (SnonIntraSearchQ) of an RSRQ for starting the inter-frequency measurement, the inter-frequency measurement of the same priority or the low priority is not started, otherwise the inter-frequency measurement of the same priority or the low priority is started.

For inter-frequency measurement of a high priority, the inter-frequency measurement of the high priority is always started.

A configuration of frequency-point priorities may be carried by means of an RRC Release message in addition to a system message signaling. At this time, the base station configures a dedicated frequency-point priority for the UE, and the UE covers public frequency-point priority information broadcasted by a system message after receiving the dedicated frequency-point priority.

Measurement relaxation in a neighbor cell is introduced in the Narrow Band Internet of Things (NB-IoT) system and the Long Term Evolution (LTE) enhanced Machine-Type Communication (LTE enhanced MTO, eMTC) system is introduced.

NB-IoT and eMTC are simplified and lightweight versions of LTE devices and are designed for Internet of Things applications having low power consumption, low costs, low speed, large connections and wide coverage. 5G defines three major scenarios: eMBB, uRLLC, and mMTC. EMBB is mainly for broad-bandwidth applications such as 4K/8K, Virtual Reality (VR) or Augmented Reality (AR). URLLC is mainly for ultra-high reliability and ultra-low latency applications such as remote robot control and autonomous driving. NB-IoT and eMTC would be evolved into mMTC and are mainly for low-speed large-scale Internet of Things connections.

For NB-IoT and eMTC terminals with low mobility, when changes to the RSRP of the serving cell are small, it is indicated that a UE has little requirements for cell reselection. Therefore, the measurement in the neighbor cell can be relaxed to achieve the purpose of energy saving for the UE.

Two sets of measurement relaxation criteria are introduced for RRM measurement for non-connected terminals: low-mobility criterion and not-cell-edge criterion.

### 1. Low-mobility criterion

An RSRP change evaluation duration (TSearchDeltaP) and an RSRP change value threshold (SSearchDeltaP) are configured in a system message (System Information Block (SIB) 3), which means that the cell supports the UE in relaxing measurement in the neighbor cell. When and only when the following conditions are met, can the UE perform the measurement relaxation in the neighbor cell:
- a condition for the measurement relaxation in the neighbor cell is met within a time range (TSearchDeltaP)
- less than 24 hours have passed since the last measurement.

The condition for the measurement relaxation is: a change in the reference Srxlev of the serving cell relative to a measured value of a current Srxlev of the serving cell is less than the SSearchDeltaP.

When the UE selects or reselects to a new cell, or (Srxlev-SrxlevRef) is greater than 0, or the condition for the measurement relaxation is not met within the TSearchDeltaP, the UE sets the SrxlevRef to the measured value of the current Srxlev of the serving cell.

The value of the TSearchDeltaP is 5 minutes. Alternatively, if an Extended Discontinuous Reception (eDRX) mode is configured and an eDRX period is longer than 5 minutes, the value of the TSearchDeltaP would be the length of the DRX period.

### 2. Not-cell-edge criterion

When the Srxlev is greater than the RSRP threshold (SSearchThresholdP) and the Squal is greater than the RSRQ threshold (SSearchThresholdQ) (if the network configures the SSearchThresholdQ), the UE meets the not-cell-edge criterion, and the UE may perform measurement relaxation in the neighbor cell.

### NTN

The NTN generically provides communication service to a ground user by means of satellite communication. Compared with ground cellular network communication, the satellite communication has many unique advantages. Firstly, satellite communication is not limited by region of users. For example, general land communication cannot cover regions where communication devices cannot be installed or communication coverage cannot be provided due to underpopulation, such as seas, mountains, deserts, etc.,. However, for the satellite communication, one satellite can cover large ground, and the satellite can perform orbital motion around the earth, so that each corner on the earth can theoretically be covered by the satellite communication. Secondly, the satellite communication has great social value. The satellite communication can cover remote mountain areas and poor and backward countries or regions with a lower cost, so that people of these regions can enjoy advanced voice communication and mobile internet technology, thereby facilitating reduction in the digital divide from developed regions, and facilitating development of these regions. Thirdly, a satellite communication distance is long, and the communication cost does not increase obviously as the communication distance increases. Finally, the satellite communication is highly stable, and is not vulnerable to natural disasters.

Communication satellites are divided according to orbit altitudes into Low-Earth Orbit (LEO) satellites, Medium-Earth Orbit (MEO) satellites, Geostationary Earth Orbit (GEO) satellites, High Elliptical Orbit (HEO) satellites and the like. The satellites that are mainly studied at the current stage are LEO satellites and GEO satellites.

Altitude of the LEO satellites range from 500 km to 1500 km, and the corresponding orbit period is around 1.5 hours to 2 hours. Signal propagation delay of single-hop communication between users is generally less than 20ms and the maximum satellite visual time is 20 minutes. In addition, the signal propagation distance is short; the link loss is small, and the requirements for the transmission power of user terminals are not high.

For the GEO satellites, the orbit altitude is 35786 km; a period of revolution around the earth is 24 hours, and the signal propagation delay of the single-hop communication between the users is generally 250ms.

To ensure the coverage of a satellite and to improve a system capacity of the entire satellite communication system, the satellite uses multiple beams to cover the ground. One satellite may generate tens of or even hundreds of beams to cover the ground. One satellite beam can cover a ground area with a diameter of tens to hundreds of kilometers.

Currently, there are two kinds of satellites considered in 3GPP. One kind of satellites is a transparent payload satellite, and another one is a regenerative payload satellite. The transparent payload satellite only performs processes such as conversion and amplification of the frequencies of signals, and the satellite is transparent for the signals. The regenerative payload satellite has part of or all of functions of a base station, performs conversion and amplification of the frequencies of signals, and also has the functions of demodulation and decoding, conversion and/or routing, encoding and modulation.

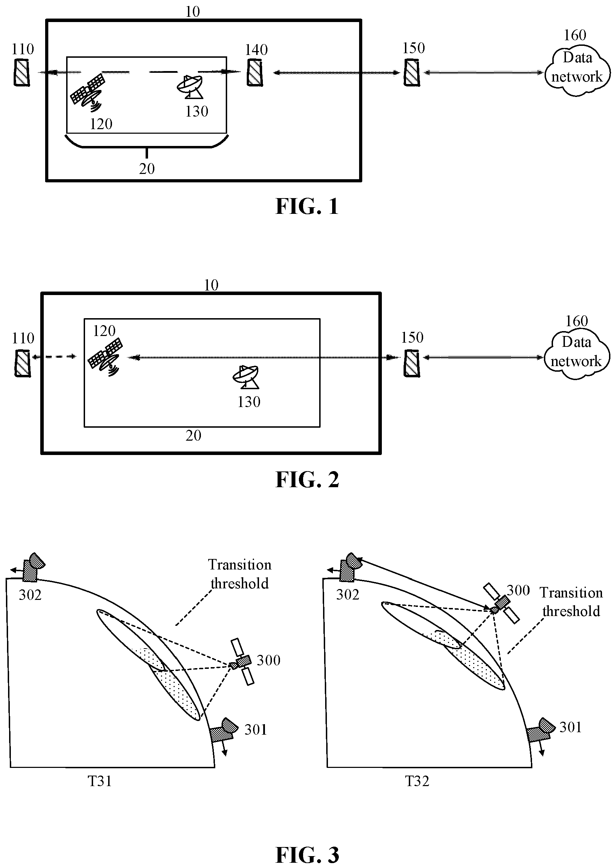

An architecture of a transparent payload satellite network is shown in FIG. 1. A UE 110 performs access to communicate with a 5G Core Network (CN) 150 through a Next Generation Radio Access Network (NG-RAN) 10 and is connected to a data network 160 through the 5G CN 150.

The NG-RAN 10 includes a remote radio unit 20 and a Next Generation Node B (gNB) 140. The remote radio unit 20 includes a satellite 120 and an NTN gateway 130. The satellite 120 communicates with the UE 110 through a service link or radio link. The satellite 120 may communicate with the NTN gateway 130 based on a feeder link or radio link and is connected to the gNB 140 through the gateway 130.

An architecture of a regenerative payload satellite network is shown in FIG. 2. The NG-RAN 10 includes a remote radio unit 20. The remote radio unit 20 includes a satellite 120 and an NTN gateway 130, and the feeder link between the satellite 120 and the NTN gateway 130 is based on a Satellite Radio Interface (SRI). The satellite 120 has part of or all of functions of a base station.

In the network architecture shown in FIGS. 1 and 2, the radio link between the satellite 120 and the NTN gateway 130 (typically on the ground, also referred to as a terrestrial gateway) is a feeder link.

As shown in FIG. 3, when the LEO satellite moves at high speed, the connection between the satellite and the terrestrial gateway also needs to be switched. A satellite 300 is located on a respective side of a transition threshold at time T31 and at time T32. The satellite 300 is connected to a gateway 301 at time T1 and is connected to a gateway 302 at time T2.

If the gateway 301 and the gateway 302 are connected to two terrestrial gNBs (complete gNB or CU) or two cells under one gNB, for all UEs in an area covered by the satellite, it is necessary to switch from an original cell to a new cell after the feeder link is switched. If the gateway 301 and the gateway 302 are connected to the same cell under the same gNB, theoretically, the UE does not need to perform a switching operation.

In the NTN system, since the measurement value of the RSRP cannot accurately reflect the difference between an edge of a cell and a center of the cell, the traditional not-cell-edge criterion based on the RSRP threshold cannot accurately describe a location of the UE in the cell. For example, when the value of the RSRP of the UE is lower than the RSRP threshold, the UE may be in the center of the cell due to the problem of the measurement accuracy of the RSRP. At this time, if the measurement relaxation is performed, the power consumption of the UE would be increased. Similarly, if the value of the RSRP of the UE is higher than the RSRP threshold, the UE may actually be at the edge of the cell. At this time, according to the not-cell-edge criterion, the UE may not perform the measurement, which may affect the mobility performance of the terminal. For example, a late cell reselection may be resulted.

In view of the problems described above, embodiment of the present disclosure provides a wireless communication method. The wireless communication method in the embodiment of the present disclosure may be applied to an NTN system.

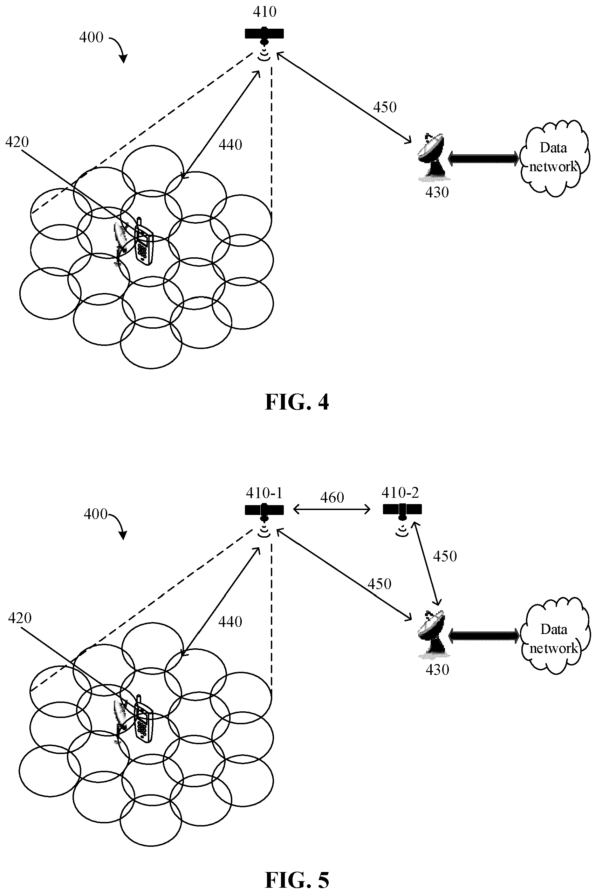

In an embodiment, the NTN system 400 to which the embodiment of the present disclosure is applied may be as shown in FIG. 4. The NTN system 400 may include a network device 410, and the network device 410 may be a device that performs communication with a UE 420 (or referred to as a communication terminal or a terminal). The network device 410 may provide communication coverage for a particular geographic area and may perform communication with a UE located within the coverage area, thereby providing services for the UE in the coverage area.

Optionally, the network device 410 may be a communication satellite or an Unmanned Aircraft System (UAS) platform. Communication satellites are divided according to orbit altitudes into LEO communication satellites, MEO communication satellites, GEO communication satellites, HEO communication satellites and the like. For the LEO communication satellites, the altitude ranges from 500 km to 1500 km, and the corresponding orbit period is around 1.5 hours to 2 hours. The signal propagation delay of the single-hop communication between the users is generally less than 20ms, and the maximum communication satellite visual time is 20 minutes. The signal propagation distance is short; the link loss is small, and the requirements for the transmission power of user terminals are not high. For the GEO communication satellites, the orbit altitude is 35786 km, and the period of revolution around the earth is 24 hours. The signal propagation delay of the single-hop communication between the users is generally 250ms.

To ensure the coverage of a satellite and to improve a system capacity of the entire satellite communication system, the satellite uses multiple beams to cover the ground. One satellite may generate tens of or even hundreds of beams to cover the ground. One satellite beam can cover a ground area with a diameter of tens to hundreds of kilometers.

The NTN system 400 further includes at least one UE 420 located in the coverage area of the network device 410. The "UE" as used herein includes, but is not limited to, a device that is configured to receive/send a communication signal for a communication satellite network, and/or an Internet of Things (IoT) device. A UE configured to perform communication by means of a wireless interface may be referred to as a "wireless communication terminal", a "wireless terminal" or a "mobile terminal". Examples of the mobile terminal include, but are not limited to, a communication satellite phone, a Personal Communications System (PCS) terminal that can combine a communication satellite phone with data processing, fax and data communication capability, a Personal Digital Assistant (PDA) that can include a radio phone, a pager, Internet/intranet access, a Web browser, a memo pad, a calendar, and/or a Global Positioning System (GPS) receiver, a conventional laptop and/or handheld receiver, or other electronic apparatuses including radio telephone transceivers. The UE may refer to an access terminal, a UE, a user unit, a user station, a mobile station, a mobile site, a remote station, a remote terminal, a mobile device, a user terminal, a terminal, a wireless communication device, a user agent, or a user apparatus. The access terminal may be a cordless phone, a Session Initiation Protocol (SIP) phone, a Wireless Local Loop (WLL) station, a PDA, a handheld device with a wireless communication function, a computing device or other processing devices connected to a wireless modem, a vehicle-mounted device, a wearable device, a UE in a 5G network, a UE in a future evolved PLMN, or the like.

The network device 410 communicates with the UE 420 through a service link or a radio link 440. The network device 410 may communicate with a gateway 430 based on a feeder link or a radio link 450 and is connected to a data network by means of the gateway 430.

In an example, as shown in FIG. 5, the network device 410 in the NTN system 400 may include two network devices (i.e., network device 410-1 and network device 410-2). The network device 410-1 and the network device 410-2 may communicate with each other by means of Inter-satellite links (ISL) 460. The network device 410-1 is used for a transparent payload: radio frequency filtering and frequency conversion amplification. A signal is not changed through the transparent payload of the network device 410-1. The network device 410-2 is used for regenerative payload: radio frequency filtering and frequency conversion amplification, as well as demodulation and decoding, conversion and/or routing, encoding and modulation.

It should be understood that a device having a communication function in the network/system in the embodiments of the present disclosure may be referred to as a communication device. Taking the NTN system 400 shown in FIG. 4 or 5 as an example, the communication device may include a network device 410 and a UE 420 that have a communication function. The network device 410 and the UE 420 may be the specific devices described above, which would not be repeated here. The communication device may further include other devices in the communication system 400. The embodiments of the present disclosure are not limited thereto.

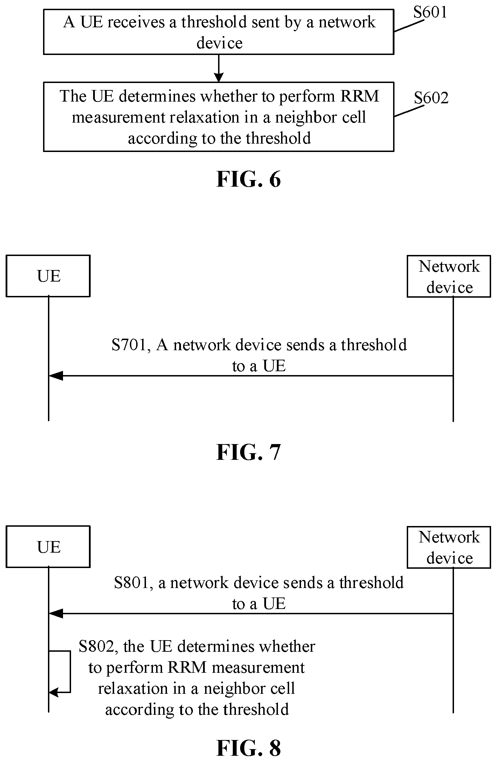

As illustrated in FIG. 6, an optional processing flow of a wireless communication method according to an embodiment of the present disclosure includes the following operations.

At S601, a UE receives a threshold sent by a network device.

The threshold includes at least one of a first threshold or a second threshold. The first threshold is used for determining whether the UE is located within a service space range of a serving cell, and the second threshold is used for determining whether the UE is located within a service time range of the serving cell.

Optionally, the threshold received by the UE includes the first threshold. Optionally, the threshold received by the UE includes the second threshold. Optionally, the threshold received by the UE includes the first threshold and the second threshold.

At S602, the UE determines whether to perform Radio Resource Management (RRM) measurement relaxation in a neighbor cell according to the threshold.

The UE may determine whether to perform RRM measurement relaxation in the neighbor cell according to part of or the entire received threshold.

Taking the threshold including the first threshold as an example, the UE determines whether the UE is located within the service space range of the serving cell according to the first threshold. If the UE is located within the service space of the serving cell, the RRM measurement relaxation in the neighbor cell is performed, otherwise, the RRM measurement relaxation in the neighbor cell is not performed.

Taking the threshold including the second threshold as an example, the UE determines whether the UE is located within the service time range of the serving cell according to the second threshold. If the UE is located within the service time of the serving cell, the RRM measurement relaxation in the neighbor cell is performed, otherwise, the RRM measurement relaxation in the neighbor cell is not performed.

The threshold including the first threshold and the second threshold is taken as an example. In an example, the UE determines whether the UE is located within the service space range of the serving cell according to the first threshold. If the UE is located within the service space of the serving cell, the RRM measurement relaxation in the neighbor cell is performed, otherwise, the RRM measurement relaxation in the neighbor cell is not performed. In an example, the UE determines whether the UE is located within the service time range of the serving cell according to the second threshold. If the UE is located within the service time of the serving cell, the RRM measurement relaxation in the neighbor cell is performed, otherwise, the RRM measurement relaxation in the neighbor cell is not performed. In an example, the UE determines whether the UE is located within the service space range of the serving cell according to the first threshold, and determines whether the UE is located within the service time range of the serving cell according to the second threshold. If the UE is located within the service space of the serving cell and is located within the service time of the serving cell, the RRM measurement relaxation in the neighbor cell is performed, otherwise, the RRM measurement relaxation in the neighbor cell is not performed.

The UE receives the threshold sent by the network device. The threshold includes at least one of the first threshold or the second threshold. The first threshold is used for determining whether the UE is located within a service space range of a serving cell, and the second threshold is used for determining whether the UE is located within a service time range of the serving cell. The UE determines whether to perform the RRM measurement relaxation in a neighbor cell according to the threshold. Whether the UE is located within the service space range of the serving cell is determined by means of the first threshold, and/or whether the UE is located within the service time range of the serving cell is determined by means of the second threshold, so that whether the UE is currently provided with a stable service by the serving cell can be accurately determined, thereby accurately determining a timing of measurement relaxation and reducing the power consumption of the UE.

As illustrated in FIG. 7, an optional processing flow of a wireless communication method according to an embodiment of the present disclosure includes the following operation.

At S701, network device sends a threshold to a UE.

The network device configures a threshold for the UE and sends the configured threshold to the UE.

The threshold is configured to be used by the UE to determine whether to perform RRM measurement relaxation in a neighbor cell. The threshold includes at least one of a first threshold or a second threshold. The first threshold is used for determining whether the UE is located within a service space range of a serving cell, and the second threshold is used for determining whether the UE is located within a service time range of the serving cell.

The UE determines whether to perform the RRM measurement relaxation in the neighbor cell according to part of or the entire received threshold.

As illustrated in FIG. 8, an optional processing flow of a wireless communication method according to an embodiment of the present disclosure includes the following operations.

At S801, a network device sends a threshold to a UE.

At S802, the UE determines whether to perform RRM measurement relaxation in a neighbor cell according to the threshold.

In some embodiments, a message for transmitting the threshold includes at least one of the following.

A system message; or
A dedicated RRC signaling.

Taking the transmission of the threshold by means of the system message as an example, the network device sends the system message carrying the threshold to the UE, and the UE parses the received system message to obtain the threshold sent by the network device. Optionally, the threshold is carried by means of system information such as SIB1, SIB2 or SIB3.

Taking the transmission of the threshold by means of the dedicated RRC signaling as an example, the network device sends the dedicated RRC signaling carrying the threshold to the UE, and the UE parses the received dedicated RRC signaling to obtain the threshold sent by the network device.

According to an embodiment of the present disclosure, messages for transmitting different thresholds may be the same or may be different. In an example, the first threshold and the second threshold are sent by means of the system message. In an example, the first threshold and the second threshold are sent by means of the dedicated RRC signaling. In an example, the first threshold is sent by means of the system message, and the second threshold is sent by means of the dedicated RRC signaling.

In some embodiments, in a case that the threshold includes the first threshold, the first threshold is used for determining, in conjunction with location assistance information, whether the UE meets a first criterion, and the first criterion is an enhanced not-cell-edge criterion based on the location assistance information.

The location assistance information is configured to represent a relative position of the UE relative to a satellite of the serving cell. The satellite of the serving cell is a satellite that accesses the serving cell, and the UE performs communication with a core network by means of the satellite of the serving cell.

In some embodiments, the location assistance information at least includes at least one of the following.

A distance between the UE and the satellite of the serving cell;
A reference distance. The reference distance is a distance between the UE and a coverage reference point of the satellite of the serving cell;
An elevation angle from the UE to the satellite of the serving cell;
A Timing Advance (TA) from the UE to the satellite of the serving cell; or
A Round-Trip Time (RTT) from the UE to the satellite of the serving cell.

According to an embodiment of the present disclosure, the location assistance information may be determined by the UE by means of the following information: location information of the UE, location information of the satellite of the serving cell, and location information of the coverage reference point of the satellite of the serving cell.

According to an embodiment of the present disclosure, the UE has a positioning capability through which the UE can obtain the location information of the UE. Optionally, the positioning capability of the UE includes a Global Navigation Satellite System (GNSS) positioning capability.

The UE obtains any one or a combination of the location information of the satellite of the serving cell and the location information of the coverage reference point of the satellite of the serving cell by means of ephemeris information. Optionally, the coverage reference point of the satellite of the serving cell includes a center point of the serving cell.

The UE determines one or more of the following location assistance information according to the location information of the UE and the location information of the satellite of the serving cell: the distance between the UE and the satellite of the serving cell, the elevation angle from the UE to the satellite of the serving cell, the TA from the UE to the satellite of the serving cell, or the RTT from the UE to the satellite of the serving cell.

The UE determines, according to the location information of the UE and the location information of the coverage reference point of the satellite of the serving cell, the distance between the UE and the coverage reference point of the satellite of the serving cell (i.e., the reference distance).

Taking the location assistance information including the distance between the UE and the satellite of the serving cell as an example, the UE determines the distance between the location information of the UE and the location information of the satellite of the serving cell and determines the distance between the UE and the satellite of the serving cell.

Taking the location assistance information including the reference distance as an example, the UE determines the distance between the location information of the UE and the location information of the coverage reference point of the satellite of the serving cell to obtain the reference distance.

Taking the location assistance information including the elevation angle from the UE to the satellite of the serving cell as an example, the UE determines the distance between the location information of the UE and the location information of the satellite of the serving cell, determines the distance between the UE and the satellite of the serving cell, and obtains, according to the determined distance and the altitude of the satellite of the serving cell represented by the location information of the satellite of the serving cell, the elevation angle from the UE to the satellite of the serving cell.

Taking the location assistance information including the TA from the UE to the satellite of the serving cell as an example, the UE determines the distance between the UE and the satellite of the serving cell according to the distance between the location information of the UE and the location information of the satellite of the serving cell, and obtains the TA from the UE to the satellite of the serving cell according to the determined distance.

Taking the location assistance information including the RTT from the UE to the satellite of the serving cell as an example, the UE determines the distance between the UE and the satellite of the serving cell according to the distance between the location information of the UE and the location information of the satellite of the serving cell and obtains the RTT from the UE to the satellite of the serving cell according to the determined distance.

In some embodiments, the first threshold includes at least one of the following.

A distance threshold. The distance threshold is a threshold of the distance between the UE and the satellite of the serving cell;
A reference distance threshold. The reference distance threshold is a threshold of the reference distance, and the reference distance is the distance between the UE and the coverage reference point of the satellite of the serving cell;
An elevation angle threshold. The elevation angle threshold is a threshold of the elevation angle from the UE to the satellite of the serving cell;
A TA threshold. The TA threshold is a threshold of the TA from the UE to the satellite of the serving cell; or
A RTT threshold. The RTT threshold is a threshold of the RTT from the UE to the satellite of the serving cell.

In some embodiments, a first condition that the UE meets the first criterion includes at least one of the following.

A first condition A that the distance between the UE and the satellite of the serving cell is less than the distance threshold.

A first condition B that the distance between the UE and the coverage reference point of the satellite of the serving cell is less than the reference distance threshold.

A first condition C that the elevation angle from the UE to the satellite of the serving cell is greater than the elevation angle threshold;
A first condition D that the TA from the UE to the satellite of the serving cell is less than the TA threshold; or
A first condition E that the RTT from the UE to the satellite of the serving cell is less than the RTT threshold.

When the UE meets one or more of the first conditions described above, it is determined that the UE meets the first criterion.

Optionally, the UE may determine which first thresholds meet the corresponding first conditions according to the configured first thresholds, and determine that the UE meets the first criterion.

In an example, the first threshold configured by the network device for the UE includes a distance threshold. In a case that the distance between the UE and the satellite of the serving cell is less than the distance threshold, it is determined that the UE meets the first criterion.

In an example, the first threshold configured by the network device for the UE includes a distance threshold and a reference distance threshold. In a case that the distance between the UE and the satellite of the serving cell is less than the distance threshold, and the reference distance is less than the reference distance threshold, it is determined that the UE meets the first criterion.

In an example, the first threshold configured by the network device for the UE includes a distance threshold, a reference distance threshold, a TA threshold, and an RTT threshold. In a case that the UE meets the following first conditions, it is determined that the UE meets the first criterion: the distance between the UE and the satellite of the serving cell being less than the distance threshold, the reference distance being less than the reference distance threshold, the TA being less than the TA threshold, or the RTT being less than the RTT threshold.

Optionally, the network device configures first threshold indication information for the UE, and the first threshold indication information is configured to indicate the first threshold used for determining whether the UE meets the first criterion.

In an example, the first threshold configured by the network device for the UE includes a distance threshold, a reference distance threshold, a TA threshold, and an RTT threshold, and the first threshold that is indicated by the first threshold indication information and is used for determining whether the UE meets the first criterion includes the distance threshold and the reference distance threshold. In a case that the distance between the UE and the satellite of the serving cell is less than the distance threshold and the reference distance is less than the reference distance threshold, it is determined that the UE meets the first criterion.

In some embodiments, in a case that the threshold includes the second threshold, the second threshold is used for determining, in conjunction with a current moment, whether the UE meets a second criterion, and the second criterion is an enhanced not-cell-edge criterion based on the current moment.

In some embodiments, the second threshold includes at least one of the following:
An absolute time threshold; or
An absolute time range.

In some embodiments, the absolute time threshold is a moment before a feeder link of the satellite of the serving cell is switched.

The absolute time threshold is T1; the time when the feeder link of the satellite of the serving cell is switched is T0, and T1 is the moment before T0. At time T0, the feeder link of the satellite of the serving cell is switched, and the current serving cell no longer provides services for the UE. At time T1, the satellite of the serving cell is about to perform the switching of the feeder link, and the serving cell is currently providing services for the UE. That is, the serving cell would no longer provide services for the UE.

Optionally, a time interval between T1 and T0 is fixed. Optionally, the time interval between T1 and T0 is greater than a first time interval threshold.

Optionally, the network device obtains T0, determines T1 according to T0, and sends the determined T1 to the UE.

In some embodiments, the absolute time range is within an available time range of the serving cell.

The available time range of the serving cell is [T4, T5]. That is, the time at which the current satellite of the serving cell serves the area covered by the serving cell is [T4, T5]. The absolute time range is [T2, T3], and [T2, T3] is within [T4, T5]. Within the period of time [T2, T3], the UE is still within the serving range of the cell. [T4, T2] and [T3, T5] belong to the time that the UE is about to exit the cell, and the UE may normally start the measurement in the neighbor cell to discover a target cell as soon as possible.

Optionally, the time interval between T4 to T2 may be fixed, and the time interval between T3 to T5 may be fixed. Optionally, the time interval between T4 to T2 is greater than a second time interval threshold, and the time interval between T3 to T5 is greater than a third time interval threshold.

According to an embodiment of the present disclosure, the first time interval threshold, the second time interval threshold and the third time interval threshold are not limited in size.

Optionally, the network device obtains [T4, T5], determines [T2, T3] according to [T4, T5], and sends the determined [T2, T3] to the UE.

In some embodiments, a second condition that the UE meets the second criterion includes at least one of the following:
A second condition A that the current moment is earlier than the absolute time threshold; or
A second condition B that the current moment is within the absolute time range.

When the UE meets one or more of the second conditions described above, it is determined that the UE meets the second criterion.

Optionally, the UE may determine which second thresholds meet the corresponding second conditions according to the configured second thresholds, and determine that the UE meets the second criterion.

In an example, the second threshold configured by the network device for the UE includes an absolute time threshold. In a case that the current moment is earlier than the absolute time threshold, it is determined that the UE meets the second criterion.

In an example, the second threshold configured by the network device for the UE includes an absolute time range. In a case that the current moment is within the absolute time range, it is determined that the UE meets the second criterion.

In an example, the second threshold configured by the network device for the UE includes an absolute time threshold and an absolute time range. In a case that the current moment is earlier than the absolute time threshold and the current moment is within the absolute time range, it is determined that the UE meets the second criterion.

Optionally, the network device configures second threshold indication information for the UE, and the second threshold indication information is configured to indicate the second threshold used for determining whether the UE meets the second criterion.

In an example, the second threshold configured by the network device for the UE includes an absolute time threshold and an absolute time range, and the second threshold that is indicated by the second threshold indication information and is used for determining whether the UE meets the second criterion includes the absolute time threshold. In a case that the current moment is earlier than the absolute time threshold, it is determined that the UE meets the second criterion.

In some embodiments, the threshold further includes a third threshold, and the third threshold is used for determining whether the UE is located within the signal coverage area of the serving cell.

In some embodiments, the third threshold is used for determining, in conjunction with signal information of a reference signal received by the UE, whether the UE meets a third criterion, and the third criterion is a not-cell-edge criterion based on the signal information of the reference signal.

Optionally, the signal information of the reference signal includes at least one of the RSRP or the RSRQ.

In some embodiments, the third threshold includes:
An RSRP threshold.
An RSRQ threshold.

In some embodiments, a third condition that the UE meets the third criterion includes at least one of the following.

A third condition A that the RSRP of the UE is greater than the RSRP threshold; or
A third condition B that the RSRQ of the UE is greater than the RSRQ threshold.

In a case that the UE meets one or more of the third conditions described above, it is determined that the UE meets the third criterion.

Optionally, the UE may determine which third thresholds meet the corresponding third conditions according to the configured third thresholds, and determine that the UE meets the third criterion.

In an example, the third threshold configured by the network device for the UE includes an RSRP threshold. In a case that the RSRP of the UE is greater than the RSRP threshold, it is determined that the UE meets the third criterion.

In an example, the third threshold configured by the network device for the UE includes an RSRQ threshold. In a case that the RSRQ of the UE is greater than the RSRQ threshold, it is determined that the UE meets the third criterion.

In an example, the third threshold configured by the network device for the UE includes an RSRP threshold and an RSRQ threshold. In a case that the RSRP of the UE is greater than the RSRP threshold and the RSRQ of the UE is greater than the RSRQ threshold, it is determined that the UE meets the third criterion.

Optionally, the network device configures third threshold indication information to the UE, and the third threshold indication information is configured to indicate a third threshold used for determining whether the UE meets the third criterion.

In an example, the third threshold configured by the network device for the UE includes an RSRP threshold and an RSRQ threshold, and the third threshold that is indicated by the third threshold indication information and is used for determining whether the UE meets the third criterion includes the RSRQ threshold. In a case that the RSRQ of the UE is greater than the RSRQ threshold, it is determined that the UE meets the third criterion.

In some embodiments, a condition that the UE performs the RRM measurement relaxation in the neighbor cell includes at least one of the following.

A first condition: it is determined based on the first threshold that the UE meets the first criterion. The first criterion is the enhanced not-cell-edge criterion based on the location assistance information;
A second condition: it is determined based on the second threshold that the UE meets the second criterion. The second criterion is the enhanced not-cell-edge criterion based on the current moment; or
A third condition: it is determined based on the third threshold that the UE meets the third criterion. The third threshold is used for determining whether the UE is located within the signal coverage area of the serving cell, and the third criterion is a not-cell-edge criterion based on the signal information of the reference signal.

In an example, in the case that it is determined based on the first threshold that the UE meets the first criterion, the UE performs the RRM measurement relaxation in the neighbor cell.

In an example, in the case that it is determined based on the second threshold that the UE meets the second criterion, the UE performs the RRM measurement relaxation in the neighbor cell.

In an example, in the case that it is determined based on the third threshold that the UE meets the third criterion, the UE performs the RRM measurement relaxation in the neighbor cell.

In an example, in the case that it is determined based on the first threshold that the UE meets the first criterion and it is determined based on the third threshold that the UE meets the third criterion, the UE performs the RRM measurement relaxation in the neighbor cell.

In an example, in the case that it is determined based on the second threshold that the UE meets the second criterion and it is determined based on the third threshold that the UE meets the third criterion, the UE performs the RRM measurement relaxation in the neighbor cell.

In an example, in the case that it is determined based on the first threshold that the UE meets the first criterion, it is determined based on the second threshold that the UE meets the second criterion, and it is determined based on the third threshold that the UE meets the third criterion, the UE performs the RRM measurement relaxation in the neighbor cell.

Optionally, in the case that the threshold configured by the network device for the UE includes multiple types of thresholds, the UE may perform the RRM measurement relaxation in the neighbor cell with condition corresponding to only one type of threshold being met, and the UE may perform the RRM measurement relaxation in the neighbor cell with conditions corresponding to various types of multiple thresholds being met.

In an example, the network device configures a first threshold and a third threshold for the UE. When it is determined based on the first threshold that the first criterion is met, the UE may perform the RRM measurement relaxation in the neighbor cell. When it is determined based on the first threshold that the first criterion is met and it is determined based on the third threshold that the third criterion is met, the terminal may perform the radio resource measurement relaxation in the neighbor cell.

The condition used by the UE may be preset.

In some embodiments, the condition used by the UE to perform the RRM measurement relaxation in the neighbor cell is determined at least according to the threshold configured by the network device for the UE.

Here, the condition that the UE performs the RRM measurement relaxation in the neighbor cell is determined according to the threshold configured by the network device for the UE.

In an example, the network device configures the first threshold for the UE. In the case that the UE determines, based on the first threshold, that the UE meets the first criterion, the UE performs the RRM measurement relaxation in the neighbor cell.

In an example, the network device configures the second threshold for the UE. In the case that the UE determines, based on the second threshold, that the UE meets the second criterion, the UE performs the RRM measurement relaxation in the neighbor cell.

In an example, the network device configures the third threshold for the UE. In the case that the UE determines, based on the third threshold, that the UE meets the third criterion, the UE performs the RRM measurement relaxation in the neighbor cell.

In an example, the network device configures the first threshold and the third threshold for the UE. If the UE determines, based on the first threshold, that the UE meets the first criterion, and the UE determines, based on the third threshold, that the UE meets the third criterion, the UE performs the RRM measurement relaxation in the neighbor cell.

In an example, the network device configures the second threshold and the third threshold for the UE. If the UE meets the second criterion and the third criterion, the UE performs the RRM measurement relaxation in the neighbor cell.

In an example, the network device configures the first threshold, the second threshold and the third threshold for the UE. If the UE meets the first criterion, the second criterion and the third criterion, the UE performs the RRM measurement relaxation in the neighbor cell.

In some embodiments, the condition used by the UE to perform the RRM measurement relaxation in the neighbor cell is determined at least according to the indication information sent by the network device to the UE. The indication information is configured to indicate the condition that is indicated by the network device and used by the UE to perform the RRM measurement relaxation in the neighbor cell.

The network device configures the indication information for the UE, and instructs, based on the indication information, the conditions used by the UE to determine whether to perform the RRM measurement relaxation in the neighbor cell.

Optionally, the indication information indicates the content of the condition used by the UE.

In an example, the indication information indicates the UE to perform the RRM measurement relaxation in the neighbor cell in the case that the first criterion is met. If the UE meets the first criterion, the UE performs the RRM measurement relaxation in the neighbor cell.

In an example, the indication information indicates the UE to perform the RRM measurement relaxation in the neighbor cell in the case that the first criterion and the third criterion are met at the same time. If the UE meets the first criterion and the third criterion at same time, the UE performs the RRM measurement relaxation in the neighbor cell.

In an example, the indication information indicates the UE to perform the RRM measurement relaxation in the neighbor cell in the case that the second criterion and the third criterion are met at the same time. If the UE meets the second criterion and the third criterion at same time, the UE performs the RRM measurement relaxation in the neighbor cell.

In an example, the indication information indicates the UE to perform the RRM measurement relaxation in the neighbor cell in the case that the first criterion, the second criterion and the third criterion are met at the same time. If the UE meets the first criterion, the second criterion and the third criterion at same time, the UE performs the RRM measurement relaxation in the neighbor cell.

Optionally, the indication information indicates that the conditions used by the UE are part of or all of multiple conditions corresponding to the thresholds configured by the network device for the UE.

In an example, the indication information indicates that the condition used by the UE to perform the RRM measurement relaxation in the neighbor cell is any condition of the multiple conditions corresponding to the thresholds configured by the network device for the UE.

Taking the network device configuring the first criterion and the third criterion for the UE as an example, the UE performs the RRM measurement relaxation in the neighbor cell in the case that any one of the first criterion and the third criterion is met.

In an example, the indication information indicates that the conditions used by the UE to perform the RRM measurement relaxation in the neighbor cell are part of or all of the multiple conditions corresponding to the thresholds configured by the network device for the UE.

Taking the network device configuring the first criterion and the third criterion for the UE as an example, the UE simultaneously meets the first criterion and the third criterion to perform the RRM measurement relaxation in the neighbor cell.

The wireless communication method provided in the embodiments of the present disclosure would be illustrated below by means of different examples.

First example: Introducing location assistance information
The UE determines whether the UE meets an enhanced not-cell-edge criterion by means of the location assistance information, and determines whether to perform the RRM measurement relaxation in the neighbor cell. The UE determines whether to perform the measurement relaxation, which includes the following operations.

At S901, the UE receives a first threshold and/or a third threshold.

The UE obtains a not-cell-edge criterion configuration parameter by receiving a SIB or a dedicated RRC signaling, and the configuration parameter includes the third threshold and the first threshold.
a. The third-threshold is a threshold of RSRP/RSRQ used for determining whether the not-cell-edge criterion (i.e., the third criterion) is met. The third threshold includes SSearchThresholdP parameter and/or SSearchThresholdQ parameter.
b. The first threshold is a threshold of the location assistance information used for determining whether the enhanced not-cell-edge criterion (i.e., the first criterion) is met. The first threshold includes the following.

A1. a distance threshold between the UE and the satellite of the serving cell.

A2. a distance threshold between the UE and the coverage reference point (e.g., a cell center point) of the satellite of the serving cell.

A3. an elevation angle threshold from the UE to the satellite of the serving cell.

A4. a TA threshold from the UE to the satellite of the serving cell.

A5. an RTT threshold from the UE to the satellite of the serving cell.

At S902, the UE obtains the location assistance information and determines, based on the location assistance information and the first threshold, whether the first criterion is met.

The UE with the GNSS positioning capability obtains the location information of the UE, obtains the location information of the satellite of the serving cell (and/or the location information of the coverage reference point of the satellite of the serving cell) by means of the ephemeris information, and determines whether the UE meets the enhanced not-cell-edge criterion. In the case that the UE meets one or more of the following first conditions, the enhanced not-cell-edge criterion is met.

First condition 1: the distance between the UE and the satellite of the serving cell is less than the distance threshold.

First condition 2: the distance between the UE and the coverage reference point (e.g., the cell center point) of the satellite of the serving cell is less than the corresponding threshold.

First condition 3: the elevation angle from the UE to the satellite of the serving cell is greater than the elevation angle threshold.

First condition 4: the TA from the UE to the satellite of the serving cell is less than the TA threshold.

First condition 5: the RTT from the UE to the satellite of the serving cell is less than the RTT threshold.

S903, the UE performs the measurement relaxation.

The UE may perform the measurement relaxation when the following conditions are met.

Condition 1a: only the enhanced not-cell-edge criterion based on the location assistance information is met.

Condition 1b: the enhanced not-cell-edge criterion based on the location assistance information and the not-cell-edge criterion based on the RSRP/RSRQ measurement are met simultaneously.

Condition 1c: one of the enhanced not-cell-edge criterion based on the location assistance information and the not-cell-edge criterion based on the RSRP/RSRQ measurement is met.

Condition 1d: when the two criteria are configured simultaneously, the network may further indicate the UE to determine whether the not-cell-edge criterion is met according to whether the two criteria are met at the same time or according to whether any one of the two criteria is met, so that the measurement relaxation can be performed.

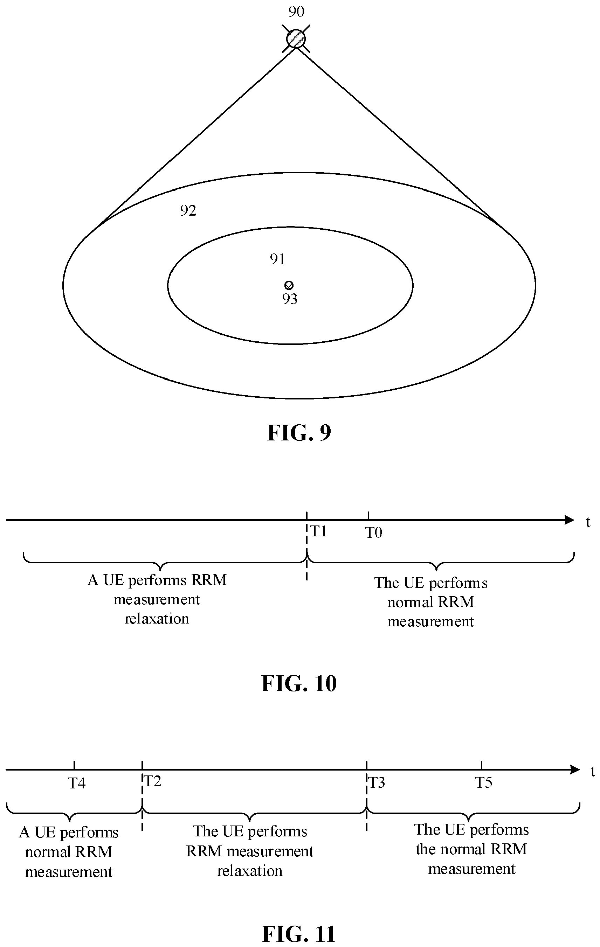

As shown in FIG. 9, the coverage area of the serving cell formed by the beam of the satellite 90 includes an area 91 and an area 92. When the location assistance information of the UE meets the enhanced not-cell-edge criterion, the UE is considered to be located in the area 91, and the measurement relaxation is performed. When the location assistance information of the UE does not meet the enhanced not-cell-edge criterion, the UE is considered to be located in the area 92, and the measurement relaxation is not performed. In the figure, 93 is the center location of the serving cell, which may be the coverage reference point of the satellite of the serving cell.

In the embodiments of the present disclosure, by introducing the enhanced not-cell-edge criterion based on the location, an error in the not-cell-edge determination caused by the inaccurate RSRP accuracy in the NTN can be further calibrated, so that the UE only performs the measurement relaxation when the UE is not at the cell edge, thereby reducing the power consumption.

Second example: Introducing information related to the time.

The UE determines whether to perform the RRM measurement relaxation in the neighbor cell by determining whether a criterion related to the time is met. The UE determines whether to perform the measurement relaxation, which includes the following operations.

At S1001, the UE receives the second threshold and/or the third threshold.

The UE obtains the not-cell-edge criterion configuration parameter by receiving a SIB or a dedicated RRC signaling, and the configuration parameter includes the third threshold and the second threshold.
a. The third-threshold is a threshold of RSRP/RSRQ used for determining whether the not-cell-edge criterion (i.e., the third criterion) is met. The third threshold includes SSearchThresholdP parameter and/or SSearchThresholdQ parameter.
b. The second threshold is a threshold related to the time for determining whether the time criterion (i.e., the second criterion) is met. The second threshold includes the following.

B1. an absolute time threshold T1.

B2. an absolute time range (time range): [T2, T3].

At S1002, the UE determines, based on the second threshold, whether the second criterion is met.

The UE determines, according to the second threshold, whether the criterion related to the time is met. The criterion is met when the UE meets one or more of the following first conditions.

Second condition 1: the current moment is earlier than the absolute time threshold T1.

For example, the absolute time threshold corresponds to a moment before T0 when the serving cell with the feeder link switch is about to disappear. After T1, the serving cell is about to disappear, and the UE should normally start the measurement in the neighbor cell to find a target cell as soon as possible.

Second condition 2: the current moment is within the absolute time range [T2, T3].

For example, for a quasi-earth-fixed cell scenario, the time range for the current satellite to serve the area is [T4, T5]. That is, the available time for the current cell is [T4, T5]. If the time range [T2, T3] configured by the network is within [T4, T5], the UE can be considered to be within the service range of the cell within the time range [T2, T3]. [T4, T2] and [T3, T5] are the time range that the UE is about to exit the cell, and the UE should normally start the measurement in the neighbor cell to find the target cell as soon as possible.

At S1003, the UE performs measurement relaxation.

The UE may perform the measurement relaxation when the following conditions are met.

Condition 2a: only the above criterion related to the time is met.

Condition 2b: the criterion related to the time and the not-cell-edge criterion based on the RSRP/RSRQ measurement are met simultaneously.

Condition 2c: one of the criterion related to the time and the not-cell-edge criterion based on the RSRP/RSRQ measurement is met.

Condition 2d: when the two criteria are configured simultaneously, the network may further indicate the UE to determine whether the not-cell-edge criterion is met according to whether the two criteria are met at the same time or according to whether any one of the two criteria is met, so that the measurement relaxation can be performed.

As shown in FIG. 10, T1 is the moment before T1. At the time before T1, the UE performs the measurement relaxation. At the time after T1, the UE does not perform the measurement relaxation and performs normal RRM measurement.

As shown in FIG. 11, [T2, T3] is within [T4, T5]. Before T2 or after T3, the UE performs normal RRM measurement. Between T2 and T3, the UE performs the measurement relaxation.

In the embodiments of the present disclosure, by introducing the criterion related to the time, the error in the not-cell-edge determination caused by the inaccurate RSRP accuracy in the NTN can be further calibrated, so that the UE only performs the relaxed measurement when the serving cell provides stable services, thereby reducing the power consumption. The UE performs normal measurement when the UE is about to exist the serving cell and finds the target cell as soon as possible to ensure the service continuity.

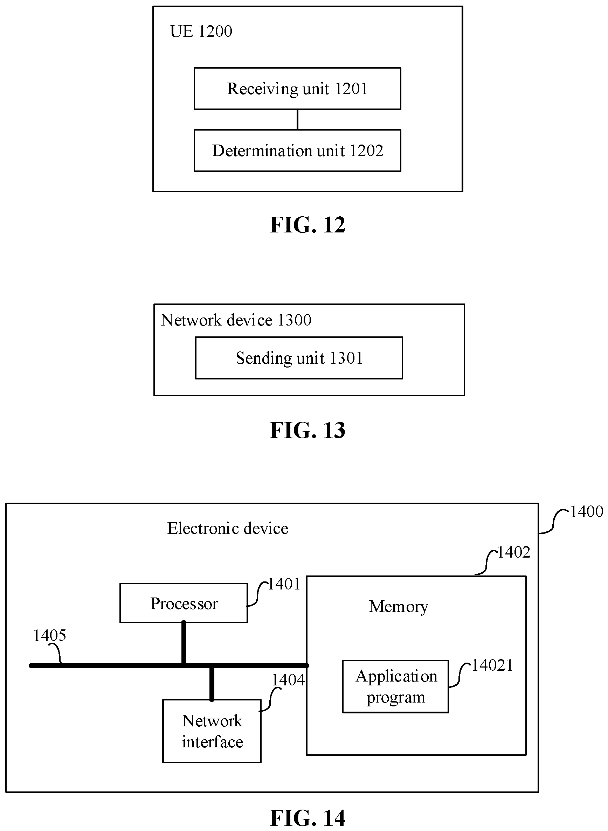

In order to achieve the above-described wireless communication method, an embodiment of the present disclosure further provides a UE. FIG. 12 illustrates a composition structure of the UE. The UE 1200 includes a receiving unit 1201 and a determination unit 1202.

The receiving unit 1201 is configured to receive a threshold sent by a network device. The threshold includes at least one of a first threshold or a second threshold. The first threshold is used for determining whether the UE is located within a service space range of a serving cell, and the second threshold is used for determining whether the UE is located within a service time range of the serving cell.

The determination unit 1202 is configured to determine, according to the threshold, whether to perform RRM measurement relaxation in a neighbor cell.

In some embodiments, a message for transmitting the threshold includes at least one of the following.

A system message; or
A dedicated RRC signaling.

In some embodiments, in a case that the threshold includes the first threshold, the first threshold and location assistance information are used for determining whether the UE meets a first criterion, and the first criterion is an enhanced not-cell-edge criterion based on the location assistance information

In some embodiments, the location assistance information includes at least one of the following.

A distance between the UE and the satellite of the serving cell;
A reference distance. The reference distance is a distance between the UE and a coverage reference point of the satellite of the serving cell;
An elevation angle from the UE to the satellite of the serving cell;
A TA from the UE to the satellite of the serving cell; or
A RTT from the UE to the satellite of the serving cell.

In some embodiments, the first threshold includes at least one of the following.

A distance threshold. The distance threshold is a threshold of the distance between the UE and the satellite of the serving cell;
A reference distance threshold. The reference distance threshold is a threshold of the reference distance, and the reference distance is the distance between the UE and the coverage reference point of the satellite of the serving cell;
An elevation angle threshold. The elevation angle threshold is a threshold of the elevation angle from the UE to the satellite of the serving cell;
A TA threshold. The TA threshold is a threshold of the TA from the UE to the satellite of the serving cell; or
A RTT threshold. The RTT threshold is a threshold of the RTT from the UE to the satellite of the serving cell.

In some embodiments, a first condition that the UE meets the first criterion includes at least one of the following.

The distance between the UE and the satellite of the serving cell is less than the distance threshold.

The distance between the UE and the coverage reference point of the satellite of the serving cell is less than the reference distance threshold.

The elevation angle from the UE to the satellite of the serving cell is greater than the elevation angle threshold;
The TA from the UE to the satellite of the serving cell is less than the TA threshold; or
The RTT from the UE to the satellite of the serving cell is less than the RTT threshold.

In some embodiments, in a case that the threshold includes the second threshold, the second threshold and a current moment are used for determining whether the UE meets a second criterion, and the second criterion is an enhanced not-cell-edge criterion based on the current moment.

In some embodiments, the second threshold includes at least one of the following.

An absolute time threshold; or
An absolute time range.

In some embodiments, the absolute time threshold is a moment before a feeder link of the satellite of the serving cell is switched.

In some embodiments, the absolute time range is within an available time range of the serving cell.

In some embodiments, a second condition that the UE meets the second criterion includes at least one of the following.

The current moment is earlier than the absolute time threshold; or
The current moment is within the absolute time range.

In some embodiments, the threshold further includes a third threshold, and the third threshold is used for determining whether the UE is located within a signal coverage of the serving cell.

In some embodiments, the third threshold and signal information of a reference signal received by the UE are used for determining whether the UE meets a third criterion, and the third criterion is a not-cell-edge criterion based on the signal information of the reference signal.

In some embodiments, the third threshold includes:
An RSRP threshold; or
An RSRQ threshold.

In some embodiments, a third condition that the UE meets the third criterion includes at least one of the following.

The RSRP of the UE is greater than the RSRP threshold; or
The RSRQ of the UE is greater than the RSRQ threshold.

In some embodiments, a condition that the UE performs the RRM measurement relaxation in the neighbor cell includes at least one of the following.

It is determined based on the first threshold that the UE meets the first criterion. The first criterion is the enhanced not-cell-edge criterion based on the location assistance information;
It is determined based on the second threshold that the UE meets the second criterion. The second criterion is the enhanced not-cell-edge criterion based on the current moment; or
It is determined based on the third threshold that the UE meets the third criterion. The third threshold is used for determining whether the UE is located within the signal coverage area of the serving cell, and the third criterion is a not-cell-edge criterion based on the signal information of the reference signal.

In some embodiments, the condition used by the UE to perform the RRM measurement relaxation in the neighbor cell is determined at least according to the threshold configured by the network device for the UE.

In some embodiments, the condition used by the UE to perform the RRM measurement relaxation in the neighbor cell is determined at least according to indication information sent by the network device to the UE. The indication information is configured to indicate the condition that is indicated by the network device and used by the UE to perform the RRM measurement relaxation in the neighbor cell.

An embodiment of the present disclosure further provides a UE. The UE includes a processor and a memory for storing a computer program executable on the processor. The processor is configured to execute the operations of the wireless communication method performed by the UE described above when running the computer program.

An embodiment of the present disclosure further provides a network device. The composition structure of the network device is as shown in FIG. 13. The network device 1300 includes a sending unit.

The sending unit 1301 is configured to send a threshold to a UE. The threshold is configured to be used by the UE to determine whether to perform RRM measurement relaxation in a neighbor cell. The threshold includes at least one of a first threshold or a second threshold. The first threshold is used for determining whether the UE is located within a service space range of a serving cell, and the second threshold is used for determining whether the UE is located within a service time range of the serving cell.

In some embodiments, a message for transmitting the threshold includes at least one of the following.

A system message; and
A dedicated RRC signaling.

In some embodiments, in a case that the threshold includes the first threshold, the first threshold is used for determining, in conjunction with location assistance information, whether the UE meets a first criterion, and the first criterion is an enhanced not-cell-edge criterion based on the location assistance information.

In some embodiments, the location assistance information includes at least one of the following.

A distance between the UE and the satellite of the serving cell;
A reference distance. The reference distance is a distance between the UE and a coverage reference point of the satellite of the serving cell;
An elevation angle from the UE to the satellite of the serving cell;
A TA from the UE to the satellite of the serving cell; or
A RTT from the UE to the satellite of the serving cell.

In some embodiments, the first threshold includes at least one of the following.

A distance threshold. The distance threshold is a threshold of the distance between the UE and the satellite of the serving cell;
A reference distance threshold. The reference distance threshold is a threshold of the reference distance, and the reference distance is the distance between the UE and the coverage reference point of the satellite of the serving cell;
An elevation angle threshold. The elevation angle threshold is a threshold of the elevation angle from the UE to the satellite of the serving cell;
A TA threshold. The TA threshold is a threshold of the TA from the UE to the satellite of the serving cell; or
A RTT threshold. The RTT threshold is a threshold of the RTT from the UE to the satellite of the serving cell.

In some embodiments, a first condition that the UE meets the first criterion includes at least one of the following.

The distance between the UE and the satellite of the serving cell is less than the distance threshold.

The distance between the UE and the coverage reference point of the satellite of the serving cell is less than the reference distance threshold.

The elevation angle from the UE to the satellite of the serving cell is greater than the elevation angle threshold;
The TA from the UE to the satellite of the serving cell is less than the TA threshold; or
The RTT from the UE to the satellite of the serving cell is less than the RTT threshold.

In some embodiments, in a case that the threshold includes the second threshold, the second threshold is used for determining, in conjunction with a current moment, whether the UE meets a second criterion; and the second criterion is an enhanced not-cell-edge criterion based on the current moment.

In some embodiments, the second threshold includes at least one of the following.

An absolute time threshold; or
An absolute time range.

In some embodiments, the absolute time threshold is a moment before a feeder link of the satellite of the serving cell is switched.

In some embodiments, the absolute time range is within an available time range of the serving cell.

In some embodiments, a second condition that the UE meets the second criterion includes at least one of the following.

The current moment is earlier than the absolute time threshold; or
The current moment is within the absolute time range.

In some embodiments, the threshold further includes a third threshold, and the third threshold is used for determining whether the UE is located within the signal coverage of the serving cell.

In some embodiments, the third threshold is used for determining, in conjunction with signal information of a reference signal received by the UE, whether the UE meets a third criterion, and the third criterion is a not-cell-edge criterion based on the signal information of the reference signal.

In some embodiments, the third threshold includes:
An RSRP threshold; or
An RSRQ threshold.

In some embodiments, a third condition that the UE meets the third criterion includes at least one of the following:
The RSRP of the UE is greater than the RSRP threshold; or
The RSRQ of the UE is greater than the RSRQ threshold.

In some embodiments, a condition that the UE performs the RRM measurement relaxation in the neighbor cell includes at least one of the following.

It is determined based on the first threshold that the UE meets the first criterion. The first criterion is the enhanced not-cell-edge criterion based on the location assistance information;
It is determined based on the second threshold that the UE meets the second criterion. The second criterion is the enhanced not-cell-edge criterion based on the current moment; or
It is determined based on the third threshold that the UE meets the third criterion. The third threshold is used for determining whether the UE is located within the signal coverage area of the serving cell, and the third criterion is a not-cell-edge criterion based on the signal information of the reference signal.

In some embodiments, the condition used by the UE to perform the RRM measurement relaxation in the neighbor cell is determined at least according to the threshold configured by the network device for the UE.

In some embodiments, the condition used by the UE to perform the RRM measurement relaxation in the neighbor cell is determined at least according to indication information sent by the network device to the UE. The indication information is configured to indicate the condition that is indicated by the network device and used by the UE to perform the RRM measurement relaxation in the neighbor cell.

Embodiments of the present disclosure further provide a network device. The network device includes a processor and a memory for storing a computer program executable on the processor. The processor is configured to execute the operations of the wireless communication method performed by the network device described above when running the computer program.

FIG. 14 is a diagram of a hardware composition structure of an electronic device (a UE or a network device) according to an embodiment of the present disclosure. The electronic device 1400 includes at least one processor 1401, a memory 1402, and at least one network interface 1404. Various components in the electronic device 1400 are coupled together by means of a bus system 1405. It can be understood that the bus system 1405 is configured to implement the connection and communication between these components. The bus system 1405 may include, in addition to a data bus, a power supply bus, a control bus, and a status signal bus. However, for the sake of clear illustration, various buses are designated as the bus system 1405 in FIG. 14.

It should be understood that the memory 1402 may be volatile memory or non-volatile memory and may also include both volatile and non-volatile memory. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an Optical Disk, or a Compact Disc Read-Only Memory (CD-ROM). The magnetic surface memory may be a magnetic disk memory or a magnetic tape memory. The volatile memory may be a Random Access Memory (RAM), which serves as an external cache. By way of illustrative but not restrictive description, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 1402 described in embodiments of the present disclosure is intended to include but not is limited to these and any other suitable types of memory.

The memory 1402 in the embodiments of the present disclosure is configured to store various types of data to support the operations of the electronic device 1400. Examples of such data include any computer program that can be run on the electronic device 1400, such as an application program 14021. The program implementing the method of the embodiments of the present disclosure may be included in the application program 14021.

The methods disclosed in the above embodiments of the present disclosure may be applied to or implemented by the processor 1401. The processor 1401 may be an integrated circuit chip having signal processing capability. In the process of implementation, the operations of the above methods may be accomplished by an integrated logic circuitry of hardware in the processor 1401 or instructions in the form of software. The processor 1401 described above may be a general purpose processor, a Digital Signal Processor (DSP) or other programmable logic devices, a discrete gate or transistor logic device, a discrete hardware component or the like. The processor 1401 may implement or perform the methods, operations and logic diagrams disclosed in embodiments of the present disclosure. The general purpose processor may be a microprocessor or any conventional processor. The operations of the methods disclosed in combination with the embodiments of the present disclosure may be directly embodied as the completion of the execution of the hardware decoding processor or the completion of the combined execution of the hardware and software modules in the decoding processor. The software module may be located in a storage medium, and the storage medium is located in a memory 1402. The processor 1401 reads the information in the memory 1402 to complete the operations of the aforementioned method in conjunction with its hardware.

In an exemplary embodiment, the electronic device 1400 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), General Purpose Processors, Controllers, Microcontroller Units (MCUs), Micro Processor Units (MPUs), or other electronic components for performing the aforementioned methods.

Embodiments of the present application further provide a storage medium for storing a computer program.

Optionally, the storage medium may be applied to the UE in the embodiments of the present disclosure, and the computer program causes a computer to perform corresponding processes in the respective methods of the embodiments of the present disclosure, which would not be repeated here for the sake of brevity.

Optionally, the storage medium may be applied to the network device in the embodiments of the present disclosure, and the computer program causes a computer to perform corresponding processes in the respective methods of the embodiments of the present disclosure, which would not be repeated here for the sake of brevity.

The present disclosure is described with reference to flowcharts and/or block diagrams of methods, device (systems) and computer program products according to embodiments of the present disclosure. It should be understood that each flow and/or block in the flowchart and/or block diagram, as well as combinations of the flows and/or blocks in the flowchart and/or block diagram, may be implemented by computer program instructions. These computer program instructions may be provided to a general purpose processor, a special purpose computer, an embedded processor, or other programmable data processing device to generate a machine, such that the device for implementing the functions specified in one or more flows of a flowchart and/or one or more blocks of a block diagram can be produced through the instructions executed by the processor of the computer or other programmable data processing device.

These computer program instructions may also be stored in a computer-readable memory capable of directing a computer or other programmable data processing device to operate in a specific manner, such that the instructions stored in the computer-readable memory can form an article of manufacture including an instruction device. The instruction device is configured to implement the functions specified in one or more flows of the flowchart and/or one or more blocks of the block diagram.

These computer program instructions may also be loaded onto a computer or other programmable data processing device, such that a series of operational operations are performed on the computer or other programmable device to realize computer-implemented processing. Therefore, the instructions performed on the computer or other programmable device provide operations for implementing the functions specified in one or more flows of the flowchart and/or one or more blocks of the block diagram.

The above is only preferred embodiments of the present disclosure, and is not intended to limit the scope of protection of the present disclosure. Any modification, equivalent replacement and improvement made within the spirit and principles of the present disclosure shall be included in the scope of protection of the present disclosure.

## Claims

1. A wireless communication method, comprising:
receiving, by a User Equipment (UE), a threshold sent by a network device, wherein the threshold comprises at least one of a first threshold or a second threshold, the first threshold is used for determining whether the UE is located within a service space range of a serving cell, and the second threshold is used for determining whether the UE is located within a service time range of the serving cell; and
determining, by the UE, according to the threshold, whether to perform Radio Resource Management (RRM) measurement relaxation in a neighbor cell.

2. The method according to claim 1, wherein a message for transmitting the threshold comprises at least one of:
a system message; or
a dedicated Radio Resource Control (RRC) signaling.

3. The method according to claim 1 or 2, wherein in a case that the threshold comprises the first threshold, the first threshold is used for determining, in conjunction with location assistance information, whether the UE meets a first criterion, and the first criterion is an enhanced not-cell-edge criterion based on the location assistance information.

4. The method according to claim 3, wherein the location assistance information comprises at least one of:
a distance between the UE and a satellite of the serving cell;
a reference distance, the reference distance being a distance between the UE and a coverage reference point of the satellite of the serving cell;
an elevation angle from the UE to the satellite of the serving cell;
a Timing Advance (TA) from the UE to the satellite of the serving cell; or
a Round-Trip Time (RTT) from the UE to the satellite of the serving cell.

5. The method according to claim 3 or 4, wherein the first threshold comprises at least one of:
a distance threshold, the distance threshold being a threshold of a distance between the UE and a satellite of the serving cell;
a reference distance threshold, the reference distance threshold being a threshold of a reference distance, and the reference distance being a distance between the UE and a coverage reference point of the satellite of the serving cell;
an elevation angle threshold, the elevation angle threshold being a threshold of an elevation angle from the UE to the satellite of the serving cell;
a Timing Advance (TA) threshold, the TA threshold being a threshold of a TA from the UE to the satellite of the serving cell; or
a Round-Trip Time (RTT) threshold, the RTT threshold being a threshold of a RTT from the UE to the satellite of the serving cell.

6. The method according to any one of claims 3 to 5, wherein a first condition that the UE meets the first criterion comprises at least one of:
a distance between the UE and a satellite of the serving cell being less than a distance threshold;
a distance between the UE and a coverage reference point of the satellite of the serving cell being less than a reference distance threshold;
an elevation angle from the UE to the satellite of the serving cell being greater than an elevation angle threshold;
a Timing Advance (TA) from the UE to the satellite of the serving cell being less than a TA threshold; or
a Round-Trip Time (RTT) from the UE to the satellite of the serving cell being less than an RTT threshold.

7. The method according to any one of claims 1 to 6, wherein in a case that the threshold comprises the second threshold, the second threshold is used for determining, in conjunction with a current moment, whether the UE meets a second criterion, and the second criterion is an enhanced not-cell-edge criterion based on the current moment.

8. The method according to claim 7, wherein the second threshold comprises at least one of:
an absolute time threshold; or
an absolute time range.

9. The method according to claim 8, wherein the absolute time threshold is a moment before a feeder link of a satellite of the serving cell is switched.

10. The method according to claim 8, wherein the absolute time range is within an available time range of the serving cell.

11. The method according to any one of claims 7 to 10, wherein a second condition that the UE meets the second criterion comprises at least one of:
the current moment being earlier than an absolute time threshold; or
the current moment being within the absolute time range.

12. The method according to any one of claims 1 to 11, wherein the threshold further comprises a third threshold, and the third threshold is used for determining whether the UE is located within a signal coverage area of the serving cell.

13. The method according to claim 12, wherein the third threshold is used for determining, in conjunction with signal information of a reference signal received by the UE, whether the UE meets a third criterion, and the third criterion is a not-cell-edge criterion based on the signal information of the reference signal.

14. The method according to claim 13, wherein the third threshold comprises:
a Reference Signal Received Power (RSRP) threshold; or
a Reference Signal Receiving Quality (RSRQ) threshold.

15. The method according to claim 13 or 14, wherein a third condition that the UE meets the third criterion comprises at least one of:
a Reference Signal Received Power (RSRP) of the UE is greater than an RSRP threshold; or
a Reference Signal Receiving Quality (RSRQ) of the UE is greater than an RSRQ threshold.

16. The method according to any one of claims 1 to 15, wherein a condition that the UE performs the RRM measurement relaxation in the neighbor cell comprises at least one of:
the UE being determined to meet a first criterion based on the first threshold, wherein the first criterion is an enhanced not-cell-edge criterion based on a location assistance information;
the UE being determined to meet a second criterion based on the second threshold, wherein the second criterion is an enhanced not-cell-edge criterion based on a current moment; or
the UE being determined to meet a third criterion based on a third threshold, wherein the third threshold is used for determining whether the UE is located within a signal coverage area of the serving cell, and the third criterion is a not-cell-edge criterion based on signal information of a reference signal.

17. The method according to claim 16, wherein the condition used by the UE to perform the RRM measurement relaxation in the neighbor cell is determined at least according to the threshold configured by the network device for the UE.

18. The method according to claim 16 or 17, wherein the condition used by the UE to perform the RRM measurement relaxation in the neighbor cell is determined at least according to indication information sent by the network device to the UE, and the indication information is configured to indicate the condition that is indicated by the network device and used by the UE to perform the RRM measurement relaxation in the neighbor cell.

19. A wireless communication method, comprising:
sending, by a network device, a threshold to a User Equipment (UE), wherein the threshold is configured to be used by the UE to determine whether to perform Radio Resource Management (RRM) measurement relaxation in a neighbor cell, wherein the threshold comprises at least one of a first threshold or a second threshold, the first threshold is used for determining whether the UE is located within a service space range of a serving cell, and the second threshold is used for determining whether the UE is located within a service time range of the serving cell.

20. The method according to claim 19, wherein a message for transmitting the threshold comprises at least one of:
a system message; or
a dedicated Radio Resource Control (RRC) signaling.

21. The method according to claim 19 or 20, wherein in a case that the threshold comprises the first threshold, the first threshold is used for determining, in conjunction with location assistance information, whether the UE meets a first criterion, and the first criterion is an enhanced not-cell-edge criterion based on the location assistance information.

22. The method according to claim 21, wherein the location assistance information comprises at least one of:
a distance between the UE and a satellite of the serving cell;
a reference distance, the reference distance being a distance between the UE and a coverage reference point of the satellite of the serving cell;
an elevation angle from the UE to the satellite of the serving cell;
a Timing Advance (TA) from the UE to the satellite of the serving cell; or
a Round-Trip Time (RTT) from the UE to the satellite of the serving cell.

23. The method according to claim 21 or 22, wherein the first threshold comprises at least one of:
a distance threshold, the distance threshold being a threshold of a distance between the UE and a satellite of the serving cell;
a reference distance threshold, the reference distance threshold being a threshold of a reference distance, and the reference distance being a distance between the UE and a coverage reference point of the satellite of the serving cell;
an elevation angle threshold, the elevation angle threshold being a threshold of an elevation angle from the UE to the satellite of the serving cell;
a Timing Advance (TA) threshold, the TA threshold being a threshold of a TA from the UE to the satellite of the serving cell; or
a Round-Trip Time (RTT) threshold, the RTT threshold being a threshold of a RTT from the UE to the satellite of the serving cell.

24. The method according to any one of claims 21 to 23, wherein a first condition that the UE meets the first criterion comprises at least one of:
a distance between the UE and a satellite of the serving cell being less than a distance threshold;
a distance between the UE and a coverage reference point of the satellite of the serving cell being less than a reference distance threshold;
an elevation angle from the UE to the satellite of the serving cell being greater than an elevation angle threshold;
a Timing Advance (TA) from the UE to the satellite of the serving cell being less than a TA threshold; or
a Round-Trip Time (RTT) from the UE to the satellite of the serving cell being less than an RTT threshold.

25. The method according to any one of claims 19 to 24, wherein in a case that the threshold comprises the second threshold, the second threshold is used for determining, in conjunction with a current moment, whether the UE meets a second criterion, and the second criterion is an enhanced not-cell-edge criterion based on the current moment.

26. The method according to claim 25, wherein the second threshold comprises at least one of:
an absolute time threshold; or
an absolute time range.

27. The method according to claim 26, wherein the absolute time threshold is a moment before a feeder link is switched.

28. The method according to claim 26, wherein the absolute time range is within an available time range of the serving cell.

29. The method according to any one of claims 25 to 28, wherein a second condition that the UE meets the second criterion comprises at least one of:
the current moment being earlier than an absolute time threshold; or
the current moment being within the absolute time range.

30. The method according to any one of claims 19 to 29, wherein the threshold further comprises a third threshold, and the third threshold is used for determining whether the UE is located within a signal coverage area of the serving cell.

31. The method according to claim 30, wherein the third threshold is used for determining, in conjunction with signal information of a reference signal received by the UE, whether the UE meets a third criterion, and the third criterion is a not-cell-edge criterion based on the signal information of the reference signal.

32. The method according to claim 31, wherein the third threshold comprises:
a Reference Signal Received Power (RSRP) threshold; or
a Reference Signal Receiving Quality (RSRQ) threshold.

33. The method according to claim 31 or 32, wherein a third condition that the UE meets the third criterion comprises at least one of:
a Reference Signal Received Power (RSRP) of the UE is greater than an RSRP threshold; or
a Reference Signal Receiving Quality (RSRQ) of the UE is greater than an RSRQ threshold.

34. The method according to any one of claims 19 to 33, wherein a condition that the UE performs the RRM measurement relaxation in the neighbor cell comprises at least one of:
the UE being determined to meet a first criterion based on the first threshold, wherein the first criterion is an enhanced not-cell-edge criterion based on a location assistance information;
the UE being determined to meet a second criterion based on the second threshold, wherein the second criterion is an enhanced not-cell-edge criterion based on a current moment; or
the UE being determined to meet a third criterion based on a third threshold, wherein the third threshold is used for determining whether the UE is located within a signal coverage area of the serving cell, and the third criterion is a not-cell-edge criterion based on signal information of a reference signal.

35. The method according to claim 34, wherein the condition used by the UE to perform the RRM measurement relaxation in the neighbor cell is determined at least according to the threshold configured by the network device for the UE.

36. The method according to claim 34 or 35, wherein the condition used by the UE to perform the RRM measurement relaxation in the neighbor cell is determined at least according to indication information sent by the network device to the UE, and the indication information is configured to indicate the condition that is indicated by the network device and used by the UE to perform the RRM measurement relaxation in the neighbor cell.

37. A User Equipment (UE), comprising:
a receiving unit, configured to receive a threshold sent by a network device, wherein the threshold comprises at least one of a first threshold or a second threshold, the first threshold is used for determining whether the UE is located within a service space range of a serving cell, and the second threshold is used for determining whether the UE is located within a service time range of the serving cell; and
a determination unit, configured to determine, according to the threshold, whether to perform Radio Resource Management (RRM) measurement relaxation in a neighbor cell.

38. A network device, comprising:
a sending unit, configured to send a threshold to a User Equipment (UE), wherein the threshold is configured to be used by the UE to determine whether to perform Radio Resource Management (RRM) measurement relaxation in a neighbor cell, wherein the threshold comprises at least one of a first threshold or a second threshold, the first threshold is used for determining whether the UE is located within a service space range of a serving cell, and the second threshold is used for determining whether the UE is located within a service time range of the serving cell.

39. A User Equipment (UE), comprising a processor and a memory for storing a computer program executable on the processor, wherein the processor is configured to execute the operations of the wireless communication method of any one of claims 1 to 18 when running the computer program.

40. A network device, comprising a processor and a memory for storing a computer program executable on the processor, wherein the processor is configured to execute the operations of the wireless communication method of any one of claims 19 to 36 when running the computer program.

41. A storage medium, storing an executable program, which, when executed by a processor, implements the wireless communication method of any one of claims 1 to 18.

42. A storage medium, storing an executable program, which, when executed by a processor, implements the wireless communication method of any one of claims 19 to 36.
